(19) Europäisches Patentamt

European Patent Office

Office européen des brevets

(11) Publication number: **0 284 040 B1**

(12) **EUROPEAN PATENT SPECIFICATION**

(45) Date of publication of patent specification: **16.02.94** (51) Int. Cl.5: **C08F 10/00**, C08F 4/64

(21) Application number: **88104644.5**

(22) Date of filing: **23.03.88**

The file contains technical information submitted after the application was filed and not included in this specification

(54) **Solid catalyst component, catalyst system containing it and its use in a process for producing alpha-olefin polymers.**

(30) Priority: **24.03.87 JP 70938/87**

(43) Date of publication of application:
**28.09.88 Bulletin 88/39**

(45) Publication of the grant of the patent:
**16.02.94 Bulletin 94/07**

(84) Designated Contracting States:
**BE DE FR GB IT NL**

(56) References cited:
**EP-A- 0 111 902**
**FR-A- 1 154 075**

(73) Proprietor: **SUMITOMO CHEMICAL COMPANY, LIMITED**
**Kitahama 4-chome 5-33**
**Chuo-ku Osaka 541(JP)**

(72) Inventor: **Sasaki, Toshio**
**9, Yushudainishi-1-chome**
**Ichihara-shi(JP)**
Inventor: **Ebara, Takeshi**
**135, Iriyamazu**
**Ichihara-shi(JP)**
Inventor: **Jyohoji, Hirofumi**
**135, Iriyamazu**
**Ichihara-shi(JP)**
Inventor: **Kawai, Kiyoshi**
**2434-155, Hanazonocho**
**Chiba-shi(JP)**

(74) Representative: **VOSSIUS & PARTNER**
**Postfach 86 07 67**
**D-81634 München (DE)**

**Description**

The present invention relates to a solid catalyst component, a catalyst system containing it for α-olefin polymerization as well as a process for producing α-olefin polymers having high stereoregularity.

It is well known that olefin polymers are produced by processes employing generally so-called Ziegler-Natta catalysts that comprise a compound of transition metal of groups IV-VI of the periodic table and either a metal of groups I-III or an organometallic compound whose constituent metal is of groups I-III.

In particular, a titanium trichloride composition is used in the commercial production of α-olefin polymers such as polypropylene or polybutene-1.

Titanium trichloride for this purpose can be produced by processes including (1) a process in which titanium tetrachloride is reduced with hydrogen and the reduction product is activated by ball-milling, (2) a process in which titanium tetrachloride is reduced with metallic aluminum and the reduction product is activated by ball-milling, and (3) a process in which titanium tetrachloride is reduced with an organoaluminum compound at a temperature of -30 to 30°C and the solid reduction product is heat-treated at a temperature of 120 to 180°C.

However, the titanium trichloride produced by these processes is not adequate to satisfaction in either catalytic activity or stereospecificity.

Various processes are proposed for the purpose of producing a titanium trichloride composition superior in catalytic activity and stereospecificity. One of the processes comprises reducing titanium tetrachloride with an organoaluminum compound, treating the solid reduction product with a complexing agent, and further reacting the resulting complex substance with titanium tetrachloride (Japanese Patent Publication No. 78-3356). Other one of the processes comprises treating the same solid reduction product as mentioned above with a complexing agent and titanium tetrachloride (Japanese Patent Publication No. 79-3480). A further one of the processes comprises treating the same solid reduction product as mentioned above with a mixture of $I_2$ and an ether compound (Japanese Patent Publication No. 80-27085).

As stated above, organoaluminum compounds are only used as reducing agents for titanium compounds to produce α-olefin polymerization catalysts superior in stereospecificity. In fact, when other organometallic compounds, e.g. organolithium compounds and organozinc compounds, of metals of groups I, II, and III are used as reducing agents, no catalyst system providing α-olefin polymers of high stereoregularity can be obtained as shown later in comparative examples.

The present inventors applied previously for a patent (Japanese Patent Application Kokai (Laid-Open) No. 84-126401) on the basis of finding that an α-olefin polymer of high stereoregularity is produced by using a solid catalyst which is prepared by reducing a titanium compound represented by the general formula $Ti(OR^1)_nX_{4-n}$ with an organoaluminum compound, and treating the resulting solid product with an ether compound and titanium tetrachloride.

Further, the present inventors have studied intensively hydrocarboxy-containing titanium compounds mentioned above, and as a result, found that organolithium compounds, organozinc compounds, organogallium compounds and organoindium compounds are effective as reducing agent, besides organoaluminum compounds. Based on this finding, the present invention has been accomplished.

That is to say, the invention involves

(I) a hydrocarbyloxy-containing solid catalyst component obtained by, reducing a titanium compound represented by the general formula $Ti(OR^1)_nX_{4-n}$, wherein $R^1$ denotes a hydrocarbon group of 1 to 20 carbon atoms, X denotes a halogen atom, and n denotes a number satisfying $0\ 3 \leq n \leq 4$, with an organometallic compound represented by the general formula $MeR^2_mY_\ell$, wherein Me denotes one or more metals selected from Ga, In, Zn and Li, $R^2$ denotes an alkyl or aryl group having up to 8 carbon atoms, Y denotes a halogen atom, hydrogen atom, or alkoxy group, and m and $\ell$ are integers satisfying $0 \leq m \leq 3$ and $0 \leq \ell \leq 3$, respectively, and m + $\ell$ = the valence of Me; and treating the resulting hydrocarbon-insoluble, hydrocarbyloxy-containing solid in slurry state with an ether compound and titanium tetrachloride at a temperature of 30 to 120°C,

(II) a catalyst system comprising the above defined solid catalyst component and an organoaluminum compound, and

(III) a process for producing an α-olefin polymer which comprises homopolymerizing or copolymerizing α-olefins in the presence of the above defined catalyst system.

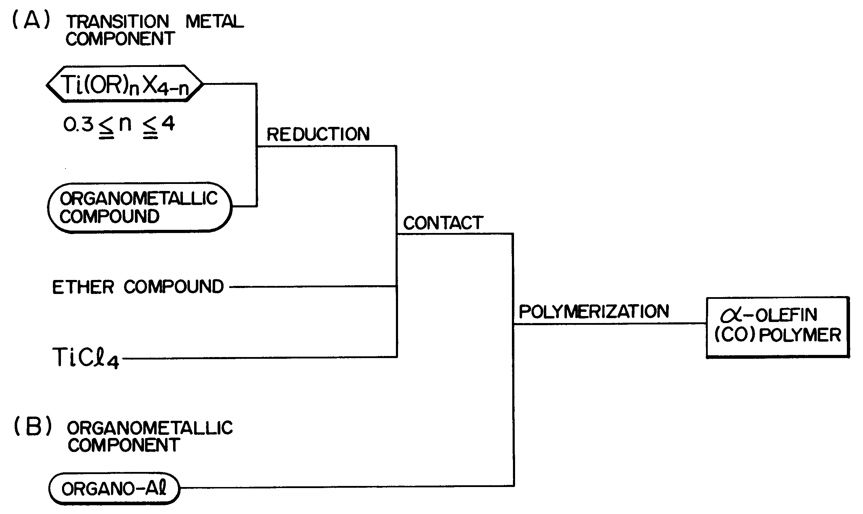

The accompanying drawing is a flow chart for aiding in the understanding of the present invention.

This flow chart illustrates a typical embodiment of the invention and in no way restricts the invention.

Hereinafter the present invention is explained specifically.

(a) Titanium compound

The titanium compound used in the present invention is represented by the general formula $Ti(OR^1)_nX_{4-n}$, wherein $R^1$ denotes a hydrocarbon group of 1 to 20 carbon atoms, X denotes a halogen atom, and n denotes a number satisfying $0.3 \leq n \leq 4$. Examples of $R^1$ include; alkyl groups such as methyl, ethyl, n-propyl, isopropyl, n-butyl, isobutyl, n-amyl, isoamyl, n-hexyl, n-heptyl, n-octyl, n-decyl and n-dodecyl; aryl groups such as phenyl, cresyl, xylyl and naphthyl; cycloalkyl groups such as cyclohexyl and cyclopentyl; alkenyl groups such as propenyl; and aralkyl groups such as benzyl.

Of these hydrocarbon groups, preferred are linear alkyl groups of 2 to 18 carbon atoms and aryl groups of 6 to 18 carbon atoms.

It is also possible to use a titanium compound of the above formula having two or more different $OR^1$ groups.

Examples of the halogen atom denoted by X include chlorine, bromine and iodine. In particular, chlorine gives favorable results.

The titanium compound represented by the general formula $Ti(OR^1)_nX_{4-n}$ $(0.3 \leq n \leq 4)$ can be prepared by a known method, for example, the method of reacting $Ti(OR^1)_4$ with $TiX_4$ in predetermined proportions or the method of reacting $TiX_4$ and a corresponding alcohol in predetermined proportions.

The n of the titanium compound represented by the general formula $Ti(OR^1)_nX_{4-n}$ is a number satisfying $0.3 \leq n \leq 4$, preferably $1 \leq n \leq 4$.

(b) Organometallic compound

The organometallic compound used in the present invention is a compound of one or more metals selected from Li, Zn, Ga and In.

Said organometallic compound is represented by the general formula $MeR^2_mY_\ell$, wherein Me denotes a metal atom as defined above, $R^2$ denotes an alkyl or aryl group having up to 8 carbon atoms, Y denotes halogen, hydrogen, or alkoxy group, and m and $\ell$ denote integers satisfying $0 \leq m \leq 3$ and $0 \leq \ell \leq 3$, respectively, and $m + \ell$ = the valence of Me. Examples of $R^2$ include; alkyl groups such as methyl, ethyl, n-propyl, isopropyl, n-butyl, isobutyl, n-amyl, isoamyl, n-hexyl, n-heptyl and n-octyl; aryl groups such as phenyl; cycloalkyl groups such as cyclohexyl; and aralkyl groups such as benzyl. It is also possible to use an organometallic compound of the above formula having two or more different $R^2$ groups.

Of these organometallic compounds, preferred are n-butyllithium, diethylzinc, triethylgallium and triethylindium.

(c) Ether compound

Suitable ether compounds for use in the present invention are dialkyl ethers such as diethyl ether, di-n-propyl ether, diisopropyl ether, di-n-butyl ether, di-n-amyl ether, diisoamyl ether, dineopentyl ether, di-n-hexyl ether, di-n-octyl ether, methyl n-butyl ether, methyl isoamyl ether and ethyl isobutyl ether.

In particular, di-n-butyl ether and diisoamyl ether are preferable.

(d) Preparation of solid catalyst component (A)

The solid catalyst component (A) of the present invention is prepared by reducing a titanium compound represented by the general formula $Ti(OR^1)_nX_{4-n}$ with an organometallic compound stated in (b) above, and treating the resulting solid with a mixture of an ether compound mentioned above and titanium tetrachloride.

These reaction processes are all operated under an atmosphere of inert gas such as nitrogen or argon.

Desirably, the reduction is carried out with the titanium compound and organometallic compound diluted respectively with an inert hydrocarbon solvent such as pentane, hexane, heptane, octane, decane, toluene or decalin to a concentration of 10 to 70% by weight.

The reduction temperature is from 10 to 80°C, preferably from 25 to 70°C.

There is no particular restriction on the reduction period, but generally this period is preferred to be from 1 to 6 hours.

The molar ratio of the titanium compound to the organometallic compound is free to choose according to the purpose. Favorable results are obtained when 0.5 to 5.0 moles of the organometallic compound is used per mole of titanium compound.

The reduction to form the solid product can also be carried out in the presence of a porous material such as silica gel, alumina or porous polymer, in which the solid product can be fixed thereby. Such a porous material is desirably in the form of spheric particles having an average diameter of 10 to 200 $\mu$m and a pore volume of 0.5 ml/g or more.

After-reaction may be allowed to proceed at a temperature of 30 to 100°C after completion of the reduction.

The hydrocarbon-insoluble, hydrocarbyloxy-containing solid product of the reduction is separated from the liquid, washed several times with an inert hydrocarbon solvent such as pentane, hexane, heptane, octane, decane, toluene, xylene, or decalin, and then reacted with the ether compound and titanium tetrachloride.

The ether compound is used in an amount of 0.1 to 5 moles, preferably 0.3 to 3 moles, per mole of titanium atoms contained in the hydrocarbyloxy-containing solid product.

Titanium tetrachloride is added in an amount of 0.1 to 10 moles, preferably 0.5 to 5 moles, per mole of titanium atoms contained in the solid product. The amount of titanium tetrachloride used per mole of the ether compound is from 0.5 to 10 moles, preferably from 1.5 to 5 moles.

The reaction of the hydrocarbon-insoluble, hydrocarbyloxy-containing solid product with the ether compound and titanium tetrachloride is performed in a slurry state.

Suitable liquids for slurrying the hydrocarbyloxy-containing solid product include; aliphatic hydrocarbons such as pentane, hexane, heptane, octane, and decane; aromatic hydrocarbons such as toluene and xylene; and alicyclic hydrocarbons such as cyclohexane, methyl-cyclohexane and decalin. In particular, aliphatic hydrocarbons cited above are preferable.

The slurry concentration is from 0.05 to 0.5 g solid/ml, preferably from 0.1 to 0.3 g solid/ml.

The reaction temperature is from 30 to 120°C, preferably from 45 to 100°C.

There is no particular restriction on the reaction period, but generally this period is preferred to be from 30 minutes to 6 hours.

As to the order of adding the reactants, the ether compound and titanium tetrachloride may be added to the solid product or conversely the solid product may be added to a solution of the ether compound and titanium tetrachloride.

In the former case, the ether compound and then titanium tetrachloride may be added to the solid product or the ether compound and titanium tetrachloride may be added at the same time, and it is preferable to add a previously prepared mixture of the ether compound and titanium tetrachloride.

The solid catalyst component obtained in the invention contains hydrocarbyloxy groups in an amount of 0.001 to 0.3 mole, preferably 0.002 to 0.15 mole, per 1 mole of titanium atoms contained.

When the content of hydrocarbyloxy groups is higher than the above upper limit, the resulting catalyst system exhibits a low catalytic activity and the $\alpha$-olefin polymerization in the presence of such a catalyst system yields a polymer of low steroregularity.

On the contrary, when the content of hydrocarbyloxy groups is less than said lower limit, the catalytic activity is especially low.

The solid catalyst component resulting from the above reaction is separated from the reaction liquid, washed several times with an inert liquid hydrocarbon such as hexane or heptene, and then used for polymerization.

(e) Organoaluminum compound (B)

The organoaluminum compound which is another component of the catalyst system used in the present invention is selected from trialkylaluminum, dialkylaluminum hydride, dialkylaluminum chloride, dialkylaluminum alkoxide, dialkylaluminum siloxide, and mixtures of these compounds.

Preferred organoaluminum compounds include, for example, dimethylaluminum chloride, diethylaluminum chloride, diisobutylaluminum chloride, diethylaluminum bromide, diethylaluminum iodide, trimethylaluminum, triethylaluminum, triisobutylaluminum, diethylaluminum hydride, diethylaluminum ethoxide, and mixtures of these compounds.

The amount of organoaluminum compound used can be chosen from the wide range of 0.1 to 500 moles per mole of titanium atoms contained in the hydrocarbyloxy-containing solid catalyst component, but the amount is preferably in the range of 0.5 to 200 moles.

(f) Olefin polymerization process

The polymerization can be carried out over the temperature range of 0 to 300°C. However, the sterospecific polymerization of $\alpha$-olefins such as propylene is generally preferred to conduct within the temperature range of 0 to 100°C for reasons such that the polymer having high stereoregularity cannot be

4

obtained at temperatures above 100°C.

There is no particular restriction on the polymerization pressure but it is preferably from about 3 to about 2000 atm in industrial and economical aspects.

The polymerization is possible in either continuous or batchwise operation.

The present invention is applicable to $\alpha$-olefins of 2 to 10 carbon atoms, for example, to ethylene, propy-lene, butene-1, 4-methylpentene-1 and hexene-1, though the invention is not limited to these compounds.

Polymerization according to the present invention may be either homopolymerization or copolymerization.

A copolymer can be obtained by contacting two or more mixed $\alpha$-olefins with the catalyst system.

Heteroblock copolymerization in which the polymerization is done in two or more stages can also be carried out with ease.

Polymerizations in various manners are possible, and include slurry polymerization in an inert hydrocarbon solvent such as butane, pentane, hexane, heptane or octane; solution polymerization in the state of the formed polymer being dissolved in such an inert hydrocarbon solvent as cited above; bulk polymerization in a liquefied monomer without using any solvent; and gas-phase polymerization in a gaseous monomer.

A chain transfer agent such as hydrogen can be added to the polymerization system for the purpose of controlling the molecular weight of polymer.

The addition of an electron donor is also possible with the object of improving the stereoregularity of polymer.

The following examples illustrate the present invention without placing any restriction thereon.

Example 1

(A) Preparation of solid product

A 200-ml flask equipped with a stirrer and a dropping funnel was purged with argon. Thereinto were charged 6.36 g (18.7 mmoles) of tetrabutoxytitanium, 3.55 g (18.7 mmoles) of titanium tetrachloride, and 15 ml of n-heptane and a mixture was stirred for 30 minutes at 30°C. Then, 23.3 ml of a hexane solution of n-butyllithium (1.6 mmoles/ml) was added dropwise from the dropping funnel over 1 hour while keeping the temperature of contents in the flask at 45°C.

After completion of the dropping, the reaction mixture was further stirred for 1 hour at 60°C, then allowed to stand at room temperature, and separated into solid and liquid. The solid was washed four times with 30 ml each of n-heptane, and dried in vacuo, giving 9.6 g of a greenish-brown solid product. One g of this solid product was found to contain 3.6 mmoles of titanium and 6.5 mmoles of n-butoxy groups.

(B) Preparation of solid catalyst component

A 100-ml flask was purged with argon, and charged with 4.9 g of the solid product prepared in (A) above and 39 ml of n-heptane. While keeping the temperature of contents in the flask at 30°C, 4.87 g (30.8 mmoles) of diisoamyl ether and 14.6 g (76.7 mmoles) of titanium tetrachloride were added. This reaction mixture was heated to 75°C and stirred at the same temperature for 2 hours. Then, the mixture was allowed to stand, and separated into solid and liquid. The solid was washed four times with 39 ml each of n-heptane, and dried in vacuo, giving 3.2 g of a purple solid catalyst component.

One g of this solid catalyst component was found to contain 4.3 mmoles of titanium, 0.14 mmoles of n-butoxy groups and 0.45 mmoles of diisoamyl ether.

(C) Polymerization of propylene

A 130 ml stainless steel autoclave equipped with a magnetic stirrer was purged with argon, and charged with 250 mg of diethylaluminum chloride, 13.2 mg of the solid catalyst component prepared in (B) above, and 80 ml of liquefied propylene.

This mixture was kept at 60°C for 1 hour with stirring. After excess propylene had been discharged, the residual solid was air-dried for 24 hours, yielding 14.3 g of a polypropylene.

Accordingly, the yield (g) of polypropylene per 1 g of solid catalyst component (hereinafter abbreviated as PP/cat) was 1080.

A sample of the obtained polypropylene powder was extracted with boiling n-heptane for 6 hours. The percentage of the amount of residue (hereinafter abbreviated as IY) was 95.4% by weight.

Comparative Example 1

(A) Preparation of solid product

A 300-ml flask equipped with a stirrer and a dropping funnel was purged with argon, and charged with 9.5 g (50 mmoles) of titanium tetrachloride and 120 ml of n-heptane. Then, 31.4 ml of a hexane solution of n-butyllithium (1.6 mmoles/ml) was added dropwise from the dropping funnel over 1 hour while keeping the temperature of contents in the flask at 45°C.

Thereafter, the reaction mixture was further stirred for 1 hour at 60°C, then allowed to stand at room temperature, and separated into solid and liquid. The solid was washed four times with 120 ml each of n-heptane, and dried in vacuo, giving 11.6 g of a solid product. One g of this solid product was found to contain 4.6 mmoles of titanium.

(B) Preparation of solid catalyst component

In the same manner as in (B) of Example 1, a solid catalyst component was prepared from the solid product obtained in (A) above. One g of this solid catalyst component was found to contain 4.0 mmoles of titanium and 0.97 mmole of diisoamyl ether.

(C) Polymerization of propylene

In the same manner as in (C) of Example 1, propylene was polymerized by using the solid catalyst component prepared in (B) above. PP/cat was 280 and IY was 62.7%.

It has proved that, when the solid catalyst component is prepared from a titanium compound having no hydrocarbyloxy group, the polymerization activity and stereospecificity of the resulting catalyst system are markedly low as compared with those of the catalyst system of Example 1.

Example 2

(A) Preparation of solid product

A 300-ml flask equipped with a stirrer and a dropping funnel was purged with argon. Thereinto were charged 6.30 g (18.5 mmoles) of tetrabutoxytitanium, 10.5 g (55.5 mmoles) of titanium tetrachloride and 180 ml of n-heptane and a mixture was stirred for 30 minutes at 30°C. Then, 37.0 ml of a hexane solution of diethylzinc (2.0 mmoles/ml) was added dropwise from the dropping funnel over 1 hour while keeping the temperature of contents in the flask at 25°C.

Thereafter, the reaction mixture was further stirred for 1 hour at 55°C, then allowed to stand at room temperature, and separated into solid and liquid. The solid was washed twice with 100 ml each of n-heptane, and dried in vacuo, giving 17.3 g of a solid product.

One g of this solid product was found to contain 4.3 mmoles of titanium and 3.9 mmoles of n-butoxy groups.

(B) Preparation of solid catalyst component

In the same manner as in (B) of Example 1, a solid catalyst component was prepared from the solid product obtained in (A) above. One g of this solid catalyst component was found to contain 4.7 mmoles of titanium, 0.15 mmole of n-butoxy groups, and 0.59 mmole of isoamyl ether.

(C) Polymerization of propylene

In the same manner as in (c) of Example 1, propylene was polymerized by using the solid catalyst component prepared in (B) above. PP/cat was 670 and IY was 98.0%.

Comparative Example 2

(A) Preparation of solid product

A 300-ml flask equipped with a stirrer and a dropping funnel was purged with argon, and charged with 9.5 g (50 mmoles) of titanium tetrachloride and 120 ml of n-heptane. Then, 25 ml of a hexane solution of diethylzinc (2.0 mmoles/ml) was added dropwise from the dropping funnel over 1 hour while keeping the temperature of contents in the flask at 25°C.

Thereafter, the reaction mixture was further stirred for 1 hour at 55°C, then allowed to stand at room temperature, and separated into solid and liquid. The solid was washed twice with 120 ml each of n-heptane, and dried in vacuo giving 12.1 g of a solid product. One g of this solid product was found to contain 3.5 mmoles of titanium.

(B) Preparation of solid catalyst component

In the same manner as in (B) of Example 1, a solid catalyst component was prepared from the solid product obtained in (A) above. One g of this solid catalyst component was found to contain 3.8 mmoles of titanium and 0.20 mmole of diisoamyl ether.

(C) Polymerization of propylene

In the same manner as in (C) of Example 1, propylene was polymerized by using the solid catalyst component prepared in (B) above. The PP/cat was as low as less than 20 and the product polymer was highly sticky. It has proved that, when the solid catalyst component is prepared from a titanium compound having no hydrocarbyloxy group, the polymerization activity and stereospecificity of the resulting catalyst system are markedly low as compared with those of the catalyst system of Example 2.

Example 3

(A) Preparation of solid product

A 300-ml flask equipped with a stirrer and a dropping funnel was purged with argon, and then charged with 12.8 g (37.5 mmoles) of tetrabutoxytitanium, 21.0 g (112.5 mmoles of titanium tetrachloride, and 91 ml of n-heptane. After stirring the mixture for 30 minutes at 30°C, 28.6 ml of a hexane solution of triethylgallium (2.64 mmoles/ml) was added dropwise from the dropping funnel over 40 minutes while keeping the temperature of contents in the flask at 25°C.

Thereafter, the reaction mixture was further stirred for 1 hour at 55°C, then allowed to stand at room temperature, and separated into solid and liquid. The solid was washed twice with 100 ml each of n-heptane, and dried in vacuo, giving 16.0 g of a solid product. One g of this solid product was found to contain 5.1 mmoles of titanium and 4.8 mmoles of n-butoxy groups.

(B) Preparation of solid catalyst component

In the same manner as in (B) of Example 1, a solid catalyst component was prepared from the solid product obtained in (A) above. One g of this solid catalyst component was found to contain 5.8 mmoles of titanium, 0.25 mmole of n-butoxy groups, and 0.61 mmole of diisoamyl ether.

(C) Polymerization of propylene

In the same manner as in (C) of Example 1, propylene was polymerized by using the solid catalyst component prepared in (B) above. PP/cat was 1070 and IY was 98.0%.

Example 4

(A) Preparation of solid product

A 300 ml flask equipped with a stirrer and a dropping funnel was purged with argon, and then charged with 20.5 g (75.5 mmoles) of tetrabutoxytitanium, 14.4 g (75.5 mmoles) of titanium tetrachloride, and 240 ml of n-heptane. After stirring the mixture for 30 minutes at 30°C, 35.6 ml of an n-hexane solution of triethylindium (1.40 mmoles/ml) was added dropwise from the dropping funnel over 1 hour while keeping the temperature of contents in the flask at 25°C.

Thereafter, the reaction mixture was further stirred for 1 hour at 25°C, then allowed to stand at room temperature, and separated into solid and liquid. The solid was washed twice with 200 ml each of n-heptane, and dried in vacuo, giving 14.0 g of a solid product. One g of this solid product was found to contain 2.1 mmoles of titanium and 1.8 mmoles of n-butoxy groups.

(B) Preparation of solid catalyst component

In the same manner as in (B) of Example 1, a solid catalyst component was prepared from the solid product obtained in (A) above. One g of this solid catalyst component was found to contain 4.6 mmoles of titanium, 0.11 mmole of n-butoxy groups, and 0.36 mmole of diisoamyl ether.

(C) Polymerization of propylene

In the same manner as in (C) of Example 1, propylene was polymerized by using the solid catalyst component prepared in (B) above. PP/cat was 650 and IY was 94.8%.

Examples 5, 6, and 7

Propylene was polymerized in the following manner by using separately solid catalyst components prepared in Examples 1, 2, and 3.

A 1-liter, stirring type, stainless steel autoclave was purged with argon, and charged with 1.24 mmoles of diethylaluminum chloride, 1.7 x $10^{-4}$ mmole of methylmethacrylate, and a certain amount of solid catalyst component. Thereto were added hydrogen in an amount corresponding to 500 mmHg partial pressure and then 280 g of liquefied propylene. The temperature of contents in the autoclave was raised to 65°C and the polymerization was continued for 2 hours at 65°C. Then, the unreacted monomer was discharged. The formed polymer was dried in vacuo at 60°C for 2 hours, giving a polypropylene powder. One g of the polypropylene powder was dissolved in 200 ml of boiling xylene. The solution was then cooled gradually to 50°C, then cooled with ice-water to 20°C while stirring, and allowed to stand for 3 hours at 20°C. The precipitated polymer was filtered off, xylene was evaporated from the Filtrate, and the residue was vacuumdried at 60°C. Thus, the polymer fraction soluble in 20°C xylene was recovered to determine the percentage of fraction soluble in 20°C xylene (abbreviated as CXS). Table 1 shows other conditions and results of the polymerization.

## Table 1

|  | Solid catalyst component | Polypropylene yield (g) | PP/cat (g/g) | CXS (wt %) |
|---|---|---|---|---|
| Example 5 | From Example 1 (33.9 mg) | 118 | 3,480 | 2.4 |
| Example 6 | From Example 1 (37.6 mg) | 94.5 | 2,510 | 1.7 |
| Example 7 | From Example 3 (26.2 mg) | 72 | 2,750 | 1.9 |

The following effects (1), (2), and (3) are achievable by using the catalyst system of the present invention as described above.

(1) Since the catalytic activity is very high per a unit weight of solid catalyst as well as per a mole of titanium atoms, polymers containing extremely-small amounts of halogen and titanium atoms, which relate intimately to the coloration, stability, and corrosiveness of the polymer, can be obtained without any special procedure for removing catalyst residues. That is, no facility to remove catalyst residues is necessary and the cost of $\alpha$-olefin polymer production can be reduced.

(2) $\alpha$-Olefin polymers of very high stereoregularity can be produced by using the catalyst system of the present invention. Consequently, the amount of amorphous by-product polymer formed is extremely small and hence $\alpha$-olefin polymers superior in mechanical properties can be produced without removing the amorphous polymer.

(3) Since a polymer of low stereoregularity soluble in the polymerization medium is formed in a markedly small amount, such a process problem does not arise as the adhesion of polymer to reaction vessels, pipes, flash hoppers, etc. In addition, the raw material monomer can be used effectively because of the markedly small amount of soluble polymer produced.

**Claims**

1. A hydrocarbyloxy-containing solid catalyst component obtained by

reducing a titanium compound represented by the general formula $\mathrm{Ti(OR^1)_nX_{4-n}}$, wherein, $R^1$ denotes a hydrocarbon group of 1 to 20 carbon atoms, X denotes a halogen atom, and n denotes a number satisfying $0.3 \leqq n \leqq 4$, with an organometallic compound represented by the general formula $\mathrm{MeR^2_mY_\ell}$, wherein, Me denotes one or more metals selected from Ga, In, Zn and Li, $R^2$ denotes an alkyl or aryl group having up to 8 carbon atoms, Y denotes a halogen atom, hydrogen atom, or alkoxy group, and m and $\ell$ are integers satisfying $0 \leqq m \leqq 3$ and $0 \leqq \ell \leqq 3$, respectively, and m + $\ell$ = the valence of Me; and

treating the resulting hydrocarbon-insoluble, hydrocarbyloxy-containing solid in slurry state with an ether compound and titanium tetrachloride at a temperature of 30 to 120°C.

2. The solid catalyst component of Claim 1, wherein the organometallic compound represented by the general formula $\mathrm{MeR^2_mY_\ell}$ is n-butyllithium, diethylzinc, triethylgallium, or triethylindium.

3. The solid catalyst component of Claim 1, wherein the n of the titanium compound represented by the general formula $\mathrm{Ti(OR^1)_nX_{4-n}}$ satisfies $1 \leqq n \leqq 4$, $R^1$ is an alkyl group of 2 to 18 carbon atoms and/or an aryl group of 6 to 18 carbon atoms and X is chlorine.

4. The solid catalyst component of Claim 1, wherein the ether compound is a dialkyl ether, preferably di-n-butyl ether or diisoamyl ether.

5. The solid catalyst component of Claim 1, wherein the amount of ether compound used for the treatment is from 0.1 to 5.0 moles per mole of the titanium contained in the solid product.

6. The solid catalyst component of Claim 1, wherein the amount of titanium tetrachloride used for the treatment is from 0.1 to 10 moles per mole of the titanium contained in the solid product.

7. The solid catalyst component of Claim 1, in which the content of hydrocarbyloxy group is from 0.001 to 0.3 mole per mole of the titanium contained therein.

8. The solid catalyst component of Claim 1, wherein the reduction of the titanium compound is carried out at a temperature of 10 to 80°C for a period of 1 to 6 hours.

9. The solid catalyst component of Claim 1, wherein the reduction of the titanium compound is carried out in the presence of a porous material, preferably in the form of spherical particles having an average diameter of 10 to 200 $\mu$m and a pore volume of at least 0.5 ml/g, and wherein the porous material is preferably silica gel, alumina, or a porous polymer.

10. The solid catalyst component of Claim 1, wherein the reaction of the solid product with the ether compound and titanium tetrachloride is carried out at a temperature of 30 to 120°C for a period of 30 minutes to 6 hours.

11. The solid catalyst component of Claim 1, wherein the medium used for the reaction of the solid product with the ether compound and titanium tetrachloride is an aliphatic hydrocarbon.

EP 0 284 040 B1

**12.** A catalyst system for producing $\alpha$-olefin polymer which comprises

(A) a hydrocarbyloxy-containing solid catalyst component according to any one of claims 1 to 11 and

(B) an organoaluminum compound.

**13.** A process for producing $\alpha$-olefin polymers which comprises homopolymerizing or copolymerizing an $\alpha$-olefin or $\alpha$-olefins at a temperature of 0 to 300 °C and a pressure of 3 to 2000 atm in the presence of a catalyst system according to claim 12.

**Patentansprüche**

**1.** Fester, Kohlenwasserstoffoxyreste enthaltender Katalysatorbestandteil, erhalten durch Reduktion einer Titanverbindung der allgemeinen Formel $Ti(OR^1)_nX_{4-n}$, in der $R^1$ einen Kohlenwasserstoffrest mit 1 bis 20 Kohlenstoffatomen bedeutet, X ein Halogenatom darstellt und n eine Zahl bedeutet, die der Formel $0,3 \leq n \leq 4$ genügt, mit einer Organometallverbindung der allgemeinen Formel $MeR^2_mY_l$, in der Me eines oder mehrere Metalle, ausgewählt aus Ga, In, Zn und Li, bedeutet, $R^2$ einen Alkyl- oder Arylrest mit bis zu 8 Kohlenstoffatomen darstellt, Y ein Halogenatom, ein Wasserstoffatom oder einen Alkoxyrest bedeutet und m und l ganze Zahlen bedeuten, die der Formel $0 \leq m \leq 3$, beziehungsweise $0 \leq l \leq 3$, genügen, und m + l die Wertigkeit von Me bedeutet, und Behandlung des erhaltenen kohlenwasserstoffunlöslichen, Kohlenwasserstoffoxyreste enthaltenden Feststoffes mit einer Etherverbindung und Titantetrachlorid in aufgeschlämmtem Zustand bei einer Temperatur von 30 bis 120 °C.

**2.** Fester Katalysatorbestandteil nach Anspruch 1, wobei die Organometallverbindung der allgemeinen Formel $MeR^2_mY_l$ n-Butyllithium, Diethylzink, Triethylgallium oder Triethylindium ist.

**3.** Fester Katalysatorbestandteil nach Anspruch 1, wobei die Variable n in der Titanverbindung der allgemeinen Formel $Ti(OR^1)_nX_{4-n}$ der Formel $1 \leq n \leq 4$ genügt, $R^1$ einen Alkylrest mit 2 bis 18 Kohlenstoffatomen und/oder einen Arylrest mit 6 bis 18 Kohlenstoffatomen bedeutet und X ein Chloratom bedeutet.

**4.** Fester Katalysatorbestandteil nach Anspruch 1, wobei die Etherverbindung ein Dialkylether, vorzugsweise Di-n-butylether oder Diisoamylether, ist.

**5.** Fester Katalysatorbestandteil nach Anspruch 1, wobei die Menge der zur Behandlung verwendeten Etherverbindung 0,1 bis 5,0 Mole pro Mol des im festen Produkt enthaltenen Titans beträgt.

**6.** Fester Katalysatorbestandteil nach Anspruch 1, wobei die Menge des zur Behandlung verwendeten Titantetrachlorids 0,1 bis 10 Mole pro Mol des im festen Produkt enthaltenen Titans beträgt.

**7.** Fester Katalysatorbestandteil nach Anspruch 1, wobei der Gehalt des Kohlenwasserstoffoxyrestes 0,001 bis 0,3 Mole pro Mol des darin enthaltenen Titans beträgt.

**8.** Fester Katalysatorbestandteil nach Anspruch 1, wobei die Reduktion der Titanverbindung über einen Zeitraum von 1 bis 6 Stunden bei einer Temperatur von 10 bis 80 °C durchgeführt wird.

**9.** Fester Katalysatorbestandteil nach Anspruch 1, wobei die Reduktion der Titanverbindung in Gegenwart eines porösen Materials, vorzugsweise in Form kugelförmiger Teilchen mit einem mittleren Durchmesser von 10 bis 200 $\mu$m und einem Porenvolumen von mindestens 0,5 ml/g, durchgeführt wird und das poröse Material vorzugsweise Silicagel, Aluminiumoxid oder ein poröses Polymer ist.

**10.** Fester Katalysatorbestandteil nach Anspruch 1, wobei die Umsetzung des festen Produktes mit der Etherverbindung und Titantetrachlorid über einen Zeitraum von 30 Minuten bis 6 Stunden bei einer Temperatur von 30 bis 120 °C durchgeführt wird.

**11.** Fester Katalysatorbestandteil nach Anspruch 1, wobei das für die Umsetzung des festen Produktes mit der Etherverbindung und Titantetrachlorid verwendete Medium ein aliphatischer Kohlenwasserstoff ist.

**12.** Katalysatorsystem zur Herstellung von $\alpha$-Olefinpolymeren, umfassend

10

EP 0 284 040 B1

(A) einen festen, Kohlenwasserstoffoxyreste enthaltenden Katalysatorbestandteil nach einem der Ansprüche 1 bis 11 und

(B) eine Organoaluminiumverbindung.

**13.** Verfahren zur Herstellung von $\alpha$-Olefinpolymeren, umfassend die Homo- oder Copolymerisation eines $\alpha$-Olefins oder von $\alpha$-Olefinen bei einer Temperatur von 0 bis 300°C und einem Druck von 3 bis 2000 atm in Gegenwart eines Katalysatorsystems nach Anspruch 12.

**Revendications**

**1.** Composant solide de catalyseur contenant des groupes oxyhydrocarbonés obtenu par

réduction d'un composé du titane représenté par la formule générale $Ti(OR^1)_nX_{4-n}$, dans laquelle $R^1$ désigne un groupe hydrocarboné ayant 1 à 20 atomes de carbone, X désigne un atome d'halogène, et n désigne un nombre satisfaisant l'inégalité $0,3 \leq n \leq 4$, avec un composé organométallique représenté par la formule générale $MeR^2_mY_l$, dans laquelle Me désigne un ou plusieurs métaux choisis parmi Ga, In, Zn et Li, $R^2$ désigne un groupe alkyle ou aryle ayant jusqu'à 8 atomes de carbone, Y désigne un atome d'halogène, un atome d'hydrogène, ou un groupe alcoxy, et m et l sont des nombres entiers satisfaisant les inégalités $0 \leq m \leq 3$ et $0 \leq l \leq 3$, respectivement, et m + l = la valence de Me; et

traitement du solide obtenu contenant des groupes oxyhydrocarbonés, insoluble dans les hydrocarbures, à l'état de suspension, avec un éther et du tétrachlorure de titane à une température de 30 à 120°C.

**2.** Composant solide de catalyseur selon la revendication 1, dans lequel le composé organométallique représenté par la formule générale $MeR^2_mY_l$ est le n-butyllithium, le diéthylzinc, le triéthylgallium, ou le triéthylindium.

**3.** Composant solide de catalyseur selon la revendication 1, dans lequel n du composé du titane représenté par la formule générale $Ti(OR^1)_nX_{4-n}$ satisfait l'inégalité $1 \leq n \leq 4$, $R^1$ est un groupe alkyle ayant 2 à 18 atomes de carbone et/ou un groupe aryle ayant 6 à 18 atomes de carbone et X est le chlore.

**4.** Composant solide de catalyseur selon la revendication 1, dans lequel l'éther est l'oxyde de dialkyle, de préférence l'oxyde de di-n-butyle ou l'oxyde de diisoamyle.

**5.** Composant solide de catalyseur selon la revendication 1, dans lequel la quantité d'éther utilisée pour le traitement est de 0,1 à 5,0 moles par mole du titane contenu dans le produit solide.

**6.** Composant solide de catalyseur selon la revendication 1, dans lequel la quantité de tétrachlorure de titane utilisée pour le traitement est de 0,1 à 10 moles par mole du titane contenu dans le produit solide.

**7.** Composant solide de catalyseur selon la revendication 1, dans lequel la teneur en groupes oxyhydrocarbonés est de 0,001 à 0,3 moles par mole du titane contenu dans celui-ci.

**8.** Composant solide de catalyseur selon la revendication 1, dans lequel la réduction du composé du titane est effectuée à une température de 10 à 80°C pendant une durée de 1 à 6 heures.

**9.** Composant solide de catalyseur selon la revendication 1, dans lequel la réduction du composé du titane est effectuée en présence d'une matière poreuse, de préférence sous forme de particules sphériques ayant un diamètre moyen de 10 à 200 $\mu$m et un volume de pores d'au moins 0,5 ml/g, et dans lequel la matière poreuse est de préférence du gel de silice, de l'alumine ou un polymère poreux.

**10.** Composant solide de catalyseur selon la revendication 1, dans lequel la réaction du produit solide avec l'éther et le tétrachlorure de titane est effectuée à une température de 30 à 120°C pendant une durée de 30 mn à 6 heures.

**11.** Composant solide de catalyseur selon la revendication 1, dans lequel le milieu utilisé pour la réaction du produit solide avec l'éther et le tétrachlorure de titane est un hydrocarbure aliphatique.

**12.** Système catalytique pour préparer un polymère d'α-oléfine qui comprend
(A) un composant solide de catalyseur contenant des groupes oxyhydrocarbonés selon l'une quelconque des revendications 1 à 11 et
(B) un composé organoaluminique.

**13.** Procédé pour préparer des polymères d'α-oléfine qui comprend l'homopolymérisation ou la copolymérisation d'une α-oléfine ou d'α-oléfines à une température de 0 à 300°C et sous une pression de 3 à 2000 atmosphères en présence d'un système catalytique selon la revendication 12.

EP 0 284 040 B1

(A) TRANSITION METAL
COMPONENT

$$Ti(OR)_n X_{4-n}$$

$$0.3 \leqq n \leqq 4$$

ORGANOMETALLIC
COMPOUND

REDUCTION

CONTACT

ETHER COMPOUND

POLYMERIZATION

$\alpha$-OLEFIN
(CO) POLYMER

$TiCl_4$

(B) ORGANOMETALLIC
COMPONENT

ORGANO-Al